**Europäisches Patentamt**

**European Patent Office**

**Office européen des brevets**

(11) Veröffentlichungsnummer: **0 164 126**
**A2**

# EUROPÄISCHE PATENTANMELDUNG

(21) Anmeldenummer: **85107025.0**

(22) Anmeldetag: **07.06.85**

(51) Int. Cl.⁴: **B 23 Q 1/18**

(30) Priorität: **08.06.84 PL 248109**

(43) Veröffentlichungstag der Anmeldung: **11.12.85**
**Patentblatt 85/50**

(84) Benannte Vertragsstaaten: **AT BE CH DE FR GB IT LI LU NL SE**

(71) Anmelder: **Politechnika Warszawska, Plac Jednosci Robotniczej 1, Warschau (PL)**

(72) Erfinder: **Orzechowski, Jan, ul. Jaworzynska 7 m 6, Warszawa (PL)**
Erfinder: **Stanclik, Bogdan, ul. Katalonska 1 m 41, Warszawa (PL)**
Erfinder: **Lasocki, Jerzy, ul. 1-szego Maja 1 m 43, Warszawa (PL)**

(74) Vertreter: **Eitle, Werner, Dipl.-Ing. et al, Hoffmann, Eitle & Partner Patentanwälte Arabellastrasse 4, D-8000 München 81 (DE)**

(54) Vorrichtung zur Verlagerung eines Werkzeuges in einem polaren Koordinatensystem.

(57) Es handelt sich um eine Vorrichtung zur Positionierung bzw. Verlagerung eines Werkzeuges in einem polaren Koordinatensystem, zum Einsatz in der Elektromaschinenindustrie, in programmierbaren technologischen Einrichtungen oder Werkzeugmaschinen, wie z.B. Schleifmaschinen für Profilöffnungen, Schweissmaschinen für axial symmetrische Gegenstände, Laser- und Elektroerosions-Bearbeitungsmaschinen oder Registriereinrichtungen. Sie ist mit einer Antriebswelle (2) versehen, die durch einen Antriebsmotor (7) über ein Antriebs-Zahnrad (6) und ein Abtriebs-Zahnrad (5) angetrieben wird. Die Antriebswelle (2) weist eine exzentrisch gegenüber ihrer Drehachse angeordnete Bohrung auf, in welcher einer in einem Zapfen (4) endende Welle (3) drehbar gelagert ist, dessen Achse gegenüber der Achse der Welle (3) um dieselbe Exzentergrösse (e) versetzt ist. Der Zapfen (4) wird durch ein drehbar und koaxial mit der Antriebswelle (2) mit gesetztem Positionierungs-Zahnrad (8) und ein Kupplungs-Zahnrad (9) eines mit dem Antriebsmotor (7) synchronisierten Hilfsmotors (10) angetrieben, wobei das Positionierungs-Zahnrad (8) mit einem Stift (11) versehen ist, der mit seinem anderen Ende verschiebbar in einem fest mit dem Zapfen (4) verbundenen Verbinder (12) eingesetzt ist, welcher in der Werkzeugplatte (13) des Kreuztisches (14) drehbar gelagert ist.

0164126

1

42 102 v/st

## Vorrichtung zur Verlagerung eines Werkzeuges
## in einem polaren Koordinatensystem

Die Erfindung betrifft eine Vorrichtung zur Verlagerung eines Werkzeuges in einem polaren Koordinatensystem, zum Einsatz im Elektromaschinenbau, in programmierbaren technologischen Einrichtungen bzw. Werkzeugmaschinen, wie Schleifmaschinen für Profilöffnungen, Schweißmaschinen für axial symmetrische Gegenstände, Laser und Elektroerosions-Bearbeitungsmaschinen oder Registriergeräten.

Bisher erfolgt in den technologischen Einrichtungen zur Bearbeitung oder Montage von Elementen die gegenseitige Positionierung des Werkstückes und des Werkzeuges in dem polaren Koordinatensystem durch Drehung des Werkstückes und radiale Bewegung des Werkzeuges. In dem Falle, in dem ein Drehen des Werkstückes wegen seiner Form oder Abmessungen unmöglich ist, wird es auf einem Kreuztisch gelagert, wobei der erwünschte Radius-Wert durch Zusammenfügung der Bewegungen in rechtwinkligen Koordinaten erreicht wird, und, falls notwendig, das Werkzeug um einen entsprechenden Winkel gedreht wird.

Die beiden bekannten Methoden erfordern ein Bewegen des Werkstückes, welches häufig, zusammen mit dem Drehtisch oder mit dem Kreuztisch, eine beträchtliche Masse hat, was sowohl energetisch als auch hinsichtlich der Leistungsfähigkeit der Einrichtung ungünstig ist. Ähnlich ungünstig ist die Durchführung eines Drehens des Werkstückes, falls mindestens eine seiner Dimensionen groß ist (z.B. eine Leiste).

Eine bekannte Vorrichtung zur Positionierung des Werkzeuges gegenüber dem Werkstück besteht aus einem x-y-Kreuztisch, auf welchem das Werkstück eingespannt wird. Jeder Wagen des Kreuztisches besitzt einen eigenen Antrieb in Form eines kinematischen Paares aus Schraube-Mutter, welches durch einen Hubmotor oder einen Gleichstrommotor mit Stellungswandler angetrieben wird. Diese Konstruktion ermöglicht die Verschiebung des Werkstückes gegenüber dem Werkzeug in der x-y-Ebene in beliebiger Richtung oder einer Bewegung des Werkstückes entlang einer beliebigen Kurve, die sich aus dem Zusammenfügen der Elementarbewegungen des durch den Motor angetriebenen Paares Schraube-Mutter ergibt. Bei dieser Lösung besitzt das außerhalb des Kreuztisches zu spannende Werkzeug ein eigenes Positionierungssystem, welches es erlaubt, das Werkzeug um einen entsprechenden Winkel zu drehen.

Bei Werkstücken mit großen Massen gestattet diese Lösung keine schnelle Verlagerung des Werkstückes, wodurch die Leistungsfähigkeit der Einrichtung vermindert wird. Durch eine Erhöhung der Positionierungsgeschwindigkeit wird die Abnutzung des kinematischen Paares Schraube-Mutter erhöht, wodurch die Positionierungsgenauigkeit erniedrigt wird. Eine Verminderung der Positionierungsgenauigkeit ist auch durch die Trennung der Stellbewegungen des Kreuztisches und des Werkzeuges verursacht.

Aufgabe der Erfindung ist es, eine Vorrichtung der eingangs genannten Art zu schaffen, die bei einfachem Aufbau eine möglichst genaue Positionierung Werkzeug/Werkstück gewährleistet.

Das Wesen der Erfindung besteht darin, daß in der Antriebswelle exzentrisch gegenüber ihrer Drehachse eine Bohrung angeordnet ist, in welcher eine in einem Zapfen endende Welle drehbar gelagert ist, dessen Achse gegenüber der Wellenachse um dieselbe Exzentergröße versetzt ist, und daß der Zapfen über ein drehbar und koaxial mit der Antriebswelle angeordnetes Positionierungs-Zahnrad und ein Kupplungszahnrad mit einem Hilfsmotor verbunden ist, der mit dem Antriebsmotor der Antriebswelle synchronisiert ist, wobei das Positionierungs-Zahnrad mit einem Stift versehen ist, der mit seinem anderen Ende in einem fest mit dem Zapfen verbundenen Verbinder verschiebbar eingesetzt ist, und wobei ferner der Zapfen drehbar in der Werkzeugplatte des Kreuztisches gelagert ist.

Die erfindungsgemäße Lösung mit einer einfachen Konstruktion der Ausführungsorgane gewährleistet die Erreichung einer hohen Genauigkeit der Parameter der einzelnen Bewegungen, d.h. eines geringen Kreisförmigkeitsfehlers in der Kreisbewegung sowie einer präzisen Bestimmung des Winkels der fortschreitenden Bewegung parallel zu dem Radius in polaren Koordinaten (r, $\varphi$ bei $\varphi$ = const.). Eine solche einfache mechanische Konstruktion erlaubt es, eine Mikroprozessor-Steuerschaltung anzuwenden, wodurch die Notwendigkeit des Einsatzes komplizierter mechanischer Steuersysteme entfällt, welche zusätzliche, sich aus komplizierten Maßketten ergebende Fehler einführen.

Der Erfindungsgegenstand wird nachstehend anhand eines in der Zeichnung dargestellten Beispieles näher erläutert. Es zeigt:

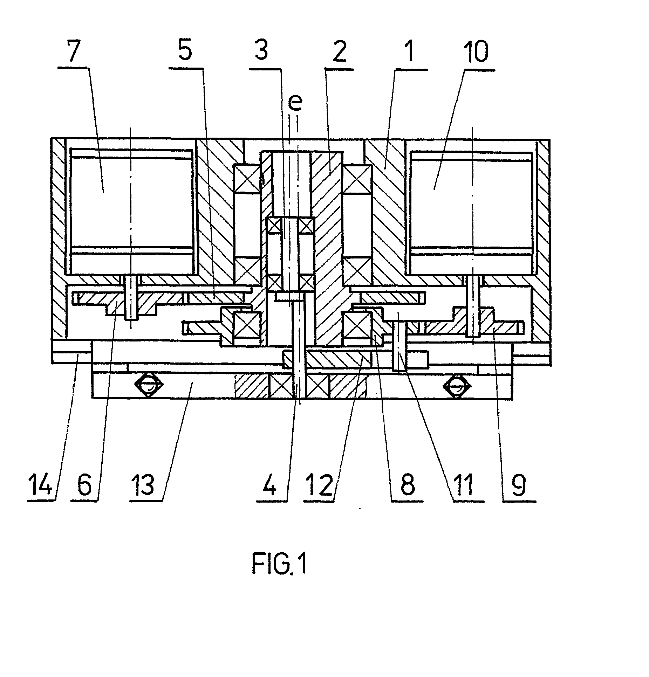

Fig. 1 einen Axialschnitt durch die Vorrichtung und

Fig. 2 ein Schema, welches die hauptsächlichen kinematischen Bewegungen darstellt, wie die Bewegung des Werkzeuges auf einem Kreis mit dem Radius r und die fortschreitende Bewegung in vorgegebener Richtung unter einem Winkel in x-y-Ebene in dem polaren Koordinatensystem.

In dem Körper 1 der Vorrichtung ist eine Antriebswelle 2 mit einer exzentrisch gegenüber ihrer Achse angeordneten Bohrung gelagert, in welcher eine in einem Zapfen 4 endende Welle 3 drehbar gelagert ist. Die Achse des Zapfens 4 ist gegenüber der Achse der Welle 3 um dieselbe Exzentergröße e versetzt, um welche die Achse der Bohrung gegenüber der Achse der Antriebswelle 2 versetzt ist. Die Antriebswelle 2 ist mit einem Abtriebs-Zahnrad 5 versehen, welches mit einem auf der Welle eines Antriebsmotors 7 befestigten Antriebszahnrad 6 in Eingriff steht. Auf derselben Antriebswelle 2 ist koaxial zu dem Abtriebs-Zahnrad 5 drehbar ein Positionierungs-Zahnrad 8 gelagert, welches mit einem auf der Antriebswelle eines Hilfsmotors 10 befestigten Kupplungs-Zahnrad 9 im Eingriff steht. Das Positionierungs-Zahnrad 8 ist mit einem Stift 11 versehen, der verschiebbar in einem fest an den Zapfen 4 befestigten Verbinder 12 eingesetzt ist. Gleichzeitig ist der Zapfen 4 drehbar in einer Werkzeugplatte 13 eines Kreuztisches 14 gelagert. Der Kreuztisch 14 ist fest an dem Körper 1 befestigt.

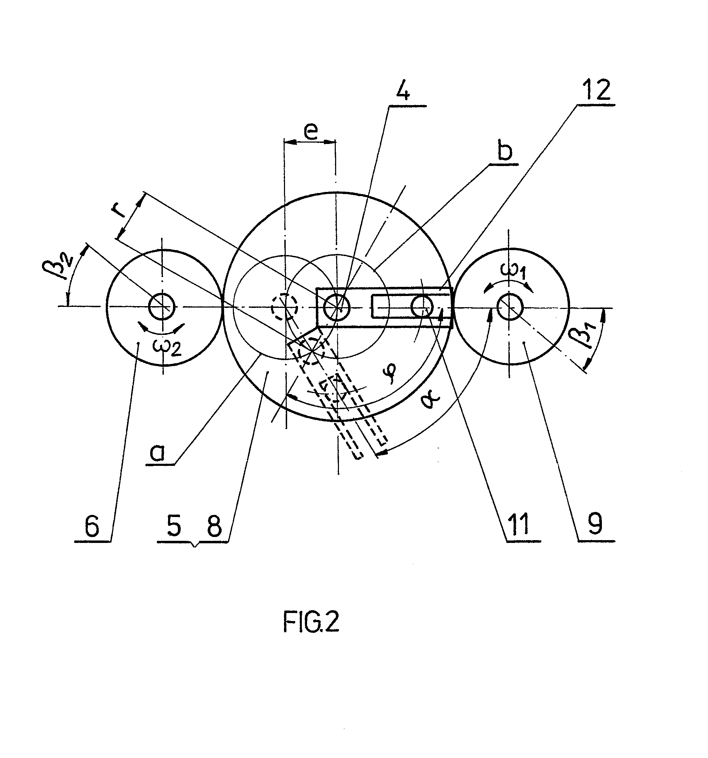

In der in Fig. 2 gezeigten Lage nehmen der Zapfen 4 und der Stift 11 in dem Verbinder 12 eine Lage gegenüber dem Abtriebs-Zahnrad 5 ein, die als Nullage betrachtet wird. In dieser Lage deckt sich die Drehachse des Zapfens 4 mit der Drehachse der Antriebswelle 2 und die resultierende Exzentrizität des Systems ist gleich Null. In dieser Lage bewirkt die synchrone Einschaltung des Antriebsmotors 7 und des Hilfsmotors 10, wenn die Drehgeschwindigkeit, $\omega_1$ des Kupplungs-Zahnrades 9 der Drehgeschwindigkeit $\omega_2$ des Antriebszahnrades 6 gleich ist und gleichzeitig der Drehwinkel $\beta_1$ des Kupplungs-Zahnrades 9 dem Drehwinkel $\beta_2$ des Antriebszahnrades 6 gleich ist, daß der Zapfen 4 sich um die Achse der Antriebswelle 2

0164126

dreht und keine Bewegung des Kreuztisches 14 bewirkt. Eine Änderung der gegenseitigen Winkellage des Abtriebs-Zahnrades 5 und des Positionierungs-Zahnrades 8 durch momentane Einführung eines von Null abweichenden Unterschiedes zwischen den Geschwindigkeiten $\omega_1$ und $\omega_2$ bewirkt eine Änderung der Lage des Verbinders 12 um den Winkel $\alpha$.

Im Ergebnis führt die Achse des Zapfens 4 eine Bewegung auf dem Kreis a aus, dessen maximaler Radius dem zweifachen Wert des Exzenters e für $\alpha$ = 180° gleich ist. Wenn der Winkel $\alpha$ zwischen 0° und 180° liegt, dann bewirken gleiche Geschwindigkeiten $\omega_1 = \omega_2$ eine Bewegung der Achse des Zapfens 4 auf dem Kreis b mit einem Radius r größer Null, der aber kleiner ist oder gleich dem zweifachen Wert des Exzenters e. Der Mittelpunkt dieses Kreises deckt sich mit der Drehachse der Antriebswelle 2. Der Wert dieses Radius r wird auf dem Kreuztisch 14 abgebildet. In dem System wird auch die fortschreitende Bewegung der Werkzeugplatte 13 des Kreuztisches 14 realisiert, und zwar in einer beliebigen Richtung $\varphi$, wo $\varphi$ = f($\alpha$), von der Nullachse in der x-y-Ebene. Diese sich aus der Zusammenfügung der Elementarbewegungen des Kreuztisches 14 in Richtung x und y ergebende Bewegung wird durch die fortschreitende Bewegung des Zapfens 4 erzwungen. Der Zapfen 4 führt eine fortschreitende Bewegung in dem Fall aus, in dem bei vorgegebenem Winkel $\varphi$ das Antriebszahnrad 6 und das Kupplungs-Zahnrad 9 in entgegengesetzten Richtungen drehen. Die besprochenen Bewegungen werden auf das Werkzeug, das direkt an der Werkzeugplatte 13 des Kreuztisches 14 befestigt ist, übertragen.

## Patentanspruch

Vorrichtung zur Verlagerung eines Werkzeuges in einem polaren Koordinatensystem, mit einem Antriebsmotor, der eine in einem Körper (1) gelagerte Welle (2) antreibt, dadurch g e k e n n z e i c h n e t , daß die Antriebswelle (2) eine exzentrisch gegenüber ihrer Drehachse angeordnete Bohrung aufweist, in welcher die in einem Zapfen (4) endende Welle (3) drehbar gelagert ist, dessen Achse gegenüber der Achse der Welle (3) um dieselbe Exzentergröße (e) versetzt ist, und daß der Zapfen (4) über ein drehbar und koaxial mit der Antriebswelle (2) gelagertes Positionierungs-Zahnrad (8) und ein Kupplungs-Zahnrad (9) mit einem Hilfsmotor (10) verbunden ist, der mit dem Antriebsmotor (7) der Antriebswelle (2) synchronisiert ist, wobei das Positionierungs-Zahnrad (8) mit einem Stift (11) versehen ist, der mit seinem anderen Ende verschiebbar in einem fest mit dem Zapfen (4) verbundenen Verbinder (12) eingesetzt ist, und wobei ferner der Zapfen (14) drehbar in einer Werkzeugplatte (13) eines Kreuztisches (14) gelagert ist.

0164126

FIG.1

Ö 164 126

FIG.2